# FASCICULE DE BREVET EUROPEEN

(11) **EP 0 603 033 B1**
(45) Date de publication et mention de la délivrance du brevet: **16.09.1998**
(21) Numéro de dépôt: 93402982.8
(22) Date de dépôt: 10.12.1993
(51) Int. Cl.: F16L 37/133

(54) **Dispositif de raccord rapide pour conduites de fluide**
Schnellverbindung für Rohrleitungen
Quick-acting coupling for fluid conduits

(30) Priorité: 11.12.1992 FR 9214957
(43) Date de publication de la demande: 22.06.1994
(73) Titulaire: VALEO THERMIQUE HABITACLE, 78320 Le Mesnil-Saint-Denis (FR)
(72) Inventeur: Martins, Carlos, F-78490 Montfort la Maury (FR)
(74) Mandataire: Gamonal, Didier

(56) Documents cités:
- EP-A- 0 240 452
- EP-A- 0 382 484
- EP-A- 0 396 455
- EP-A- 0 404 361
- EP-A- 0 459 812
- GB-A- 2 006 102
- US-A- 4 270 778

## Description

L'invention concerne un dispositif de raccord rapide pour le raccordement bout à bout de première et seconde conduites de fluide, comprenant un élément d'accrochage solidaire d'une première desdites conduites et un élément de retenue solidaire de la seconde conduite, l'élément d'accrochage faisant saillie axialement en direction de la seconde conduite et étant flexible élastiquement dans une direction transversale de façon à s'effacer pour le passage de l'élément de retenue lors du mouvement relatif de raccordement des deux conduites, et à revenir en position élastiquement à la fin de ce mouvement, une face de l'élément d'accrochage tournée axialement vers la première conduite venant alors en butée sur une face tournée en sens opposé de l'élément de retenue.

FR-A-2 489 474 décrit un tel dispositif de raccord rapide, destiné à raccorder un tuyau souple à une tubulure appartenant à un échangeur de chaleur de chauffage d'un véhicule automobile. Dans ce dispositif connu, l'élément d'accrochage est formé d'une seule pièce avec un manchon en matière plastique sur lequel est collée l'extrémité du tuyau souple et dans lequel s'engage l'extrémité de la tubulure.

En cas de démontage du raccord, l'élément d'accrochage, qui est relativement fragile, peut se rompre. Il est alors nécessaire, pour pouvoir réaliser de nouveau le raccordement, de remplacer le tuyau souple, ce qui peut nécessiter une vidange complète du circuit de refroidissement du moteur du véhicule.

Le document EP-A-0 382 484 décrit un dispositif de raccord rapide pour le raccordement bout à bout de deux premières et secondes canalisations. Ce dispositif comprend un premier élément d'accrochage solidaire des premières canalisations et coopèrent avec un élément de retenue solidaire des secondes canalisations et un second élément d'accrochage solidaire des secondes canalisations et coopérant avec un élément de retenue solidaire des premières canalisations.

Comme décrit dans ce document, les éléments d'accrochage font saillie axialement et sont flexibles élastiquement de façon à s'effacer pour le passage de l'élément de retenue fors du mouvement relatif de raccordement des canalisations.

Comme déjà évoqué, l'un ou l'autre des éléments d'accrochage, qui sont des pièces fragiles, peut être amené à se rompre et entraîner de ce fait une impossibilité de raccordement étanche entre les canalisations.
De plus, il est nécessaire de prévoir un dispositif de raccord avec un élément d'accrochage et un élément de retenue sur chaque première et seconde canalisation, ce qui augmente le coût de fabrication de part la complexité de la pièce réaliser.

Il est également connu par le document EP-A-404361, un dispositif tel que décrit précédemment dans lequel l'élément d'accrochage appartient à une pièce d'accrochage fixée sur la première conduite.

Dans ce dispositif, il est clair qu'il est nécessaire de monter sur chaque première conduite une pièce d'accrochage comportant un élément d'accrochage qui va coopérer avec un élément de retenue prévu sur la seconde conduite qui lui fait face.

De ce fait, lorsque plusieurs premières et secondes conduites sont prévues, il sera nécessaire de prévoir un tel dispositif pour chaque première et seconde conduite, ce qui va entraîner une complexité d'élaboration du dispositif de raccord.

De plus, lors du raccordement entre les premières et secondes conduites, des manipulations supplémentaires longues et coûteuses seront indispensables pour raccorder ces conduites.

Le but de l'invention est de remédier à ces inconvénients.

L'invention vise notamment un dispositif du genre défini en introduction, et prévoit que le dispositif de raccord rapide comprend une seule pièce d'accrochage solidaire de deux premières conduites et fixée de manière amovible sur celles-ci, en ce que la pièce d'accrochage comprend un élément de liaison associé à chacune des premières conduites et en ce que l'élément de liaison est sensiblement en forme de U disposé selon un plan radial et dont les deux branches pénètrent dans une gorge annulaire extérieure de la première conduite, respectivement en deux régions diamétralement opposées de celle-ci.

D'autres caractéristiques, complémentaires ou alternatives, du dispositif selon l'invention sont énoncées ci-après :
- Les premières (ou secondes) conduites sont des tubulures d'entrée et de sortie de fluide d'un radiateur de refroidissement et/ou de chauffage de véhicule automobile, et les secondes (ou premières) conduites comprennent chacune un tuyau souple pour le raccordement du radiateur à un autre organe du circuit de refroidissement et/ou de chauffage.
- Lesdites secondes (ou premières) conduites comprennent chacune un manchon fixé de manière inamovible à l'extrémité du tuyau, le manchon coopérant avec la tubulure pour le raccordement des conduites et présentant ladite gorge.
- Le tuyau appartient à la première conduite et la tubulure est la seconde conduite.
- L'élément de liaison a la forme d'un arc de cercle supérieur à un demi-cercle et occupe une fraction correspondante du périmètre de la gorge, les extrémités de l'arc pouvant s'écarter élastiquement l'une de l'autre jusqu'au diamètre du fond de la gorge pour permettre le montage et le démontage latéraux de la pièce d'accrochage sur la première conduite.
- Ladite gorge est ménagée dans le manchon.
- Il comprend une pièce d'accrochage muni de deux éléments de liaison en U disposés dans un même plan et dont les fonds sont tournés l'un vers l'autre, coopérant respectivement avec des gorges annulaires des premières conduites.
- Il comprend deux éléments d'accrochage appartenant à ladite pièce d'accrochage et deux éléments de retenue, disposés de part et d'autre du plan des axes des deux premières et secondes conduites.
- La pièce d'accrochage comprend un corps en forme de U situé sensiblement dans un plan axial perpendiculaire au plan desdits axes, dont les branches s'étendent axialement en direction des secondes conduites et se terminent par les éléments d'accrochage, et dont le fond porte les deux éléments de liaison respectivement de part et d'autre du plan du corps.

D'autres caractéristiques et avantages de l'invention apparaîtront à l'examen de la description détaillée ci-après, et des dessins annexés, sur lesquels :
- la figure 1 est une vue en perspective éclatée d'un dispositif de raccord rapide selon l'invention ;
- la figure 2 est une vue partielle en perspective éclatée de ce même dispositif, prise dans une autre direction ; et
- la figure 3 est une vue partielle en perspective éclatée d'une variante du dispositif.

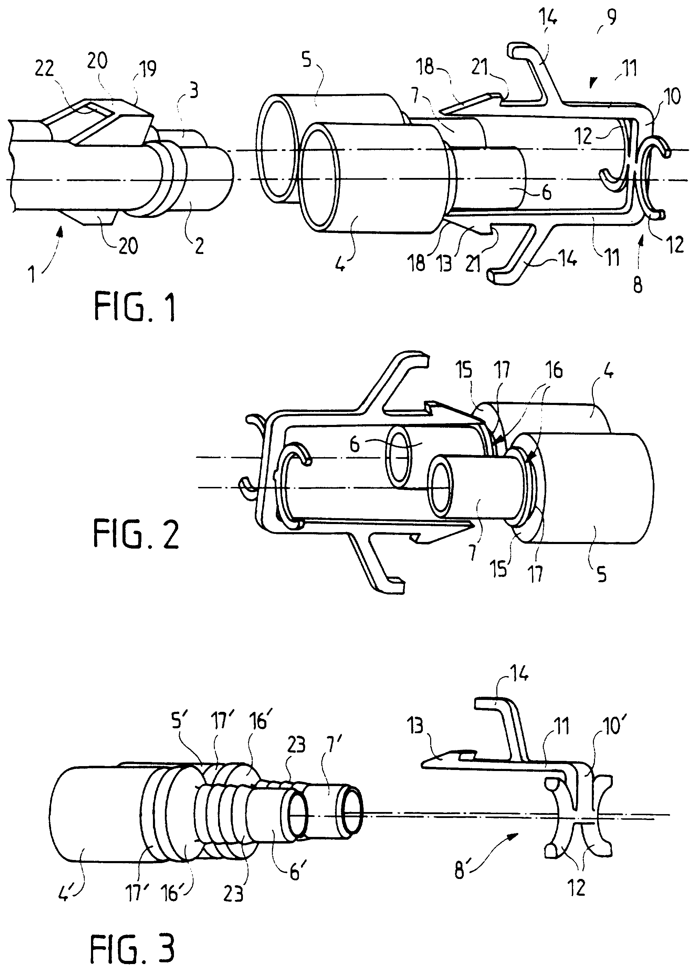

Le dispositif illustré à la figure 1 comprend un ensemble rigide 1 définissant deux tubulures 2 et 3 pour le raccordement d'une entrée et d'une sortie de fluide d'un radiateur non représenté, dans un circuit de refroidissement du moteur et/ou de chauffage de l'habitacle d'un véhicule automobile. Les extrémités libres des tubulures 2 et 3 peuvent s'engager de façon étanche, grâce à des joints d'étanchéité non représentés, dans des manchons respectifs 4 et 5 en matière plastique. A l'opposé de leurs extrémités recevant les tubulures, les manchons 4 et 5 présentent des régions de diamètre réduit 6 et 7 destinées à s'emmancher et à être fixées à des tuyaux souples non représentés qui ont pour fonction de raccorder les tubulures 2 et 3, et par suite le radiateur, aux autres organes du circuit.

Le dispositif comprend également une pièce d'accrochage en matière plastique 8 présentant un corps en forme de U 9 formé d'un fond sensiblement rectiligne 10 et de deux branches 11 sensiblement rectilignes et perpendiculaires au fond. Ce dernier porte en son milieu deux éléments de liaison 12 disposés de part et d'autre du plan général du corps 9 et symétriques l'un de l'autre par rapport à ce plan, sensiblement selon un plan perpendiculaire au précédent. Chacun de ces éléments de liaison présente la forme d'un arc de cercle supérieur à un demi-cercle. Chaque branche 11 forme à son extrémité libre un élément d'accrochage 13 en forme de demi-pointe de flèche, et un bras 14 s'étend à partir de chacune d'elles, entre le fond et l'élément d'accrochage 13, vers l'extérieur du U.

Entre l'épaulement 15 délimitant la partie de diamètre réduit 6, 7 de chacun des manchons 4 et 5 et une nervure annulaire 16 prévue sur cette partie est définie une gorge annulaire 17 dont le diamètre de fond de gorge correspond au diamètre intérieur des éléments de liaison 12. Ceux-ci peuvent donc s'engager dans les gorges de façon à solidariser les deux manchons et la pièce d'accrochage, avec les deux branches 11 situées respectivement de part et d'autre du plan des axes des deux manchons et en regard des parties de plus grand diamètre de ceux-ci. L'assemblage peut s'effectuer par un mouvement latéral des deux manchons l'un vers l'autre en direction du plan du corps 9, les branches des éléments de liaison s'écartant élastiquement pour réaliser un encliquetage. L'entr'axe des éléments de liaison 12 correspond à l'entr'axe des tubulures 2 et 3, de sorte que ces dernières peuvent s'engager dans les manchons 4 et 5 assemblés entre eux par l'intermédiaire de la pièce d'accrochage. Lors du mouvement d'introduction des tubulures dans les manchons, les bords avant inclinés 18 des éléments d'accrochage en pointe 13 viennent s'appuyer sur des bords avant 19 d'éléments de retenue 20 en forme d'étrier appartenant à l'ensemble 1. Les branches 11 fléchissent alors élastiquement en direction du plan des axes de façon à permettre le passage des éléments 13 à l'intérieur des étriers, puis s'écartent de nouveau élastiquement lorsque les éléments d'accrochage ont franchi l'obstacle. A ce moment, les bords arrière 21 des éléments d'accrochage 13 viennent en butée sur les bords arrière 22 des éléments de retenue 20, empêchant un mouvement inverse tendant à la séparation entre les tubulures et les manchons. Pour permettre une telle séparation en cas de démontage, il faut de nouveau faire fléchir les branches 11 vers l'intérieur. On peut à cet effet agir sur les bras 14 qui font saillie à l'extérieur des élément de retenue 20 et sont donc facilement accessibles. En cas de rupture de la pièce d'accrochage 9, par exemple à l'occasion d'un démontage, celle-ci peut être très facilement désolidarisée des manchons par désencliquetage des éléments de liaison 12, et remplacée par une nouvelle pièce d'accrochage, sans qu'il en résulte une détérioration quelconque des manchons ou des tuyaux souples auxquels ils sont fixés.

La figure 3 illustre une variante de la pièce d'accrochage référencée 8', dans laquelle une moitié du corps 9 de la pièce 8 des figures 1 et 2 a été supprimée pour laisser subsister une traverse 10' correspondant à la moitié du fond de U 10, ainsi qu'une branche 11, un élément d'accrochage 13 et un bras de manoeuvre 14 semblables aux éléments correspondants de la réalisation précédente. Les éléments de liaison 12 également semblables à ceux des figures 1 et 2, reliés à l'extrémité libre de la traverse 10', coopèrent de la façon décrite ci-dessus avec des gorges annulaires 17' ménagées dans des manchons 4' et 5' ayant la même forme générale que les manchons 4 et 5, ces gorges étant limitées, du côté des parties de diamètre réduit 6' et 7' de ces manchons, par des nervures annulaires 16' dont le diamètre extérieur correspond au diamètre extérieur des parties de grand diamètre des manchons. Les parties 6' et 7' présentent des bourrelets annulaires 23 destinés à faciliter la liaison étanche de tuyaux souples non représentés. De tels bourrelets n'apparaissent pas sur les figures 1 et 2 mais pourraient bien entendu y être également prévus. L'élément d'accrochage unique 13 peut coopérer avec un élément de retenue unique non représenté, analogue aux éléments de retenue 20 de la figure 1 et solidaire des extrémités de deux tubulures non représentées devant être raccordées aux manchons 4' et 5'.

## Revendications

1. Dispositif de raccord rapide pour le raccordement bout à bout de premières et secondes conduites de fluide, comprenant un élément d'accrochage (13) solidaire des premières (4,5) desdites conduites et appartenant à une pièce d'accrochage (8) et un élément de retenue (20) solidaire des secondes conduites (2,3), l'élément d'accrochage faisant saillie axialement en direction des secondes conduites et étant flexible élastiquement dans une direction transversale de façon à s'effacer pour le passage de l'élément de retenue lors du mouvement relatif de raccordement des deux conduites, et à revenir en position élastiquement à la fin de ce mouvement, une face (21) de l'élément d'accrochage tournée axialement vers la première conduite venant alors en butée sur une face (22) tournée en sens opposé de l'élément de retenue, caractérisé en ce que le dispositif de raccord rapide comprend une seule pièce d'accrochage (8) solidaire de deux premières conduites et fixée de manière amovible sur celles-ci, en ce que la pièce d'accrochage comprend un élément de liaison (12) associé à chacune des premières conduites et en ce que l'élément de liaison (12) est sensiblement en forme de U disposé selon un plan radial et dont les deux branches pénètrent dans une gorge annulaire extérieure (17) de la première conduite, respectivement en deux régions diamétralement opposées de celle-ci.

2. Dispositif selon la revendication 1, caractérisé en ce que les premières (ou secondes) conduites sont des tubulures (2,3) d'entrée et de sortie de fluide d'un radiateur de refroidissement et/ou de chauffage de véhicule automobile, et que les secondes (ou premières) conduites comprennent chacune un tuyau souple pour le raccordement du radiateur à un autre organe du circuit de refroidissement et/ou de chauffage.

3. Dispositif selon la revendication 2, caractérisé en ce que lesdites secondes (ou premières) conduites comprennent chacune un manchon (4,5) fixé de manière inamovible à l'extrémité du tuyau, le manchon coopérant avec la tubulure pour le raccordement des conduites.

4. Dispositif selon l'une des revendications 2 et 3, caractérisé en ce que le tuyau appartient à la première conduite et que la tubulure est la seconde conduite.

5. Dispositif selon la revendication 1, caractérisé en ce que l'élément de liaison (12) a la forme d'un arc de cercle supérieur à un demi-cercle et occupe une fraction correspondante du périmètre de la gorge (17), les extrémités de l'arc pouvant s'écarter élastiquement l'une de l'autre jusqu'au diamètre du fond de la gorge pour permettre le montage et le démontage latéraux de la pièce d'accrochage sur la première conduite.

6. Dispositif selon l'une des revendications 1 et 5, rattachée à la revendication 3, caractérisé en ce que ladite gorge (17) est ménagée dans le manchon (4,5).

7. Dispositif selon l'une des revendications 1 et 6, caractérisé en ce qu'il comprend une pièce d'accrochage munie de deux éléments de liaison en U (12) disposés dans un même plan et dont les fonds sont tournés l'un vers l'autre, coopérant respectivement avec des gorges annulaires (17) des premières conduites.

8. Dispositif selon la revendication 7, caractérisé en ce qu'il comprend deux éléments d'accrochage appartenant à ladite pièce d'accrochage et deux éléments de retenue, disposés de part et d'autre du plan des axes des deux premières et secondes conduites.

9. Dispositif selon la revendication 8, caractérisé en ce que la pièce d'accrochage comprend un corps (9) en forme de U situé sensiblement dans un plan axial perpendiculaire au plan desdits axes, dont les branches (11) s'étendent axialement en direction des secondes conduites et se terminent par les éléments d'accrochage (13), et dont le fond (10) porte les deux éléments de liaison respectivement de part et d'autre du plan du corps.

## Patentansprüche

1. Schnellverbindungsvorrichtung für die Aneinanderfügung von. ersten und zweiten Rohrleitungen, umfassend ein Einrastelement (13), das fest mit den ersten (4, 5) der besagten Rohrleitungen verbunden ist und zu einem Einrastteil (8) gehört, und ein Halteelement (20), das fest mit den zweiten Rohrleitungen (2, 3) verbunden ist, wobei das Einrastelement axial in Richtung der zweiten Rohrleitungen vorsteht und in einer Querrichtung elastisch biegsam ist, um sich für den Durchgang des Halteelements bei der relativen Anschlußbewegung der beiden Rohrleitungen wegzubewegen und am Ende dieser Bewegung wieder elastisch in seine Position zurückzukehren, während eine axial zur ersten Rohrleitung gerichtete Fläche (21) des Einrastelements dann an einer entgegengesetzt gerichteten Fläche (22) des Halteelements zum Anschlag kommt, **dadurch gekennzeichnet**, daß die Schnellverbindungsvorrichtung ein einziges Einrastteil (8) umfaßt, das fest mit zwei ersten Leitungen verbunden und abnehmbar an diesen befestigt ist, daß das Einrastteil ein Verbindungselement (12) umfaßt, das mit jeder der ersten Leitungen verbunden ist, und daß das Verbindungselement (12) in etwa in Form eines U ausgeführt ist, das in einer radialen Ebene angeordnet ist und dessen zwei Schenkel in eine äußere ringförmige Auskehlung (17) der ersten Leitung in zwei diametral gegenüberliegenden Bereichen dieser Leitung eingreifen.

2. Vorrichtung nach Anspruch 1, **dadurch gekennzeichnet**, daß die ersten (oder zweiten) Leitungen Fluideinlaß- und Fluidauslaßstutzen (2, 3) eines Kühl- und/oder Heizradiators eines Kraftfahrzeugs sind und daß die zweiten (oder ersten) Leitungen jeweils einen Schlauch für den Anschluß des Radiators an ein anderes Organ des Kühl-/oder Heizkreislaufs umfassen.

3. Vorrichtung nach Anspruch 2, **dadurch gekennzeichnet**, daß die besagten zweiten (oder ersten) Leitungen jeweils eine Muffe (4, 5) umfassen, die nicht abnehmbar am Ende des Schlauchs befestigt ist, wobei die Muffe mit dem Stutzen für den Anschluß der Leitungen zusammenwirkt.

4. Vorrichtung nach einem der Ansprüche 2 und 3, **dadurch gekennzeichnet**, daß der Schlauch zur ersten Leitung gehört und der Stutzen die zweite Leitung ist.

5. Vorrichtung nach Anspruch 1, **dadurch gekennzeichnet**, daß das Verbindungselement (12) die Form eines Kreisbogens hat, der größer als ein Halbkreis ist, und einen entsprechenden Bruchteil des Umfangs der Auskehlung (17) einnimmt, wobei sich die Enden des Kreisbogens elastisch bis zum Durchmesser des Bodens der Auskehlung voneinander entfernen können, um den seitlichen Einbau und Ausbau des Einrastteils an der ersten Leitung zu ermöglichen.

6. Vorrichtung nach einem der Ansprüche 1 und 5 in Verbindung mit Anspruch 3, **dadurch gekennzeichnet**, daß die besagte Auskehlung (17) in die Muffe (4, 5) eingearbeitet ist.

7. Vorrichtung nach einem der Ansprüche 1 und 6, **dadurch gekennzeichnet**, daß sie ein Einrastteil umfaßt, das mit zwei U-förmigen Verbindungselementen (12) versehen ist, die in einer gleichen Ebene angeordnet sind und deren Böden zueinander gerichtet sind, wobei sie jeweils mit ringförmigen Auskehlungen (17) der ersten Leitungen zusammenwirken.

8. Vorrichtung nach Anspruch 7, **dadurch gekennzeichnet**, daß sie zwei Einrastelemente, die zu dem besagten Einrastteil gehören, und zwei Halteelemente umfaßt, die beiderseits der Ebene der Achsen der beiden ersten und zweiten Leitungen angeordnet sind.

9. Vorrichtung nach Anspruch 8, **dadurch gekennzeichnet**, daß das Einrastteil einen U-förmigen Körper (9) umfaßt, der sich in etwa in einer zur Ebene der besagten Achsen senkrechten axialen Ebene befindet, dessen Schenkel (11) sich axial in Richtung der zweiten Leitungen erstrecken und in den Einrastelementen (13) enden und dessen Boden (10) die beiden Verbindungselemente beiderseits der Ebene des Körpers trägt.

## Claims

1. A quick coupling device for the end-to-end coupling of first and second fluid ducts, comprising a hook element (13) fixed to the first ones (4, 5) of the said ducts and being part of a clip member (8), and a retaining element (20) fixed to the second duct (2, 3), the hook element projecting axially towards the second duct and being elastically flexible in a transverse direction, in such a way as to be effaced to allow passage of the retaining element during the relative movement of the two ducts into coupled relationship, and to revert elastically into place at the end of the said movement, with a face (21) of the hook element, facing axially towards the first duct, then coming into abutment on a face (22) of the retaining element facing in the opposite direction, characterised in that the quick coupling device comprises a single clip member fixed to two first ducts and secured removably on the latter, in that the clip member includes a connecting element (12) associated with each of the first ducts, and in that the connecting element (12) is substantially U-shaped and lies in a radial plane, having two branches which penetrate into an external annular groove (17) of the first duct, in two respective diametrically opposed regions of the latter.

2. A device according to Claim 1, characterised in that the first (or second) ducts are fluid inlet and outlet tube elements (2, 3) of a cooling and/or heating radiator for a motor vehicle, and in that each of the second (or first) ducts comprises a flexible tube for connecting the radiator to another component of the cooling and/or heating circuit.

3. A device according to Claim 2, characterised in that each of the said second (or first) ducts comprises a sleeve (4, 5) fixed non-removably to the end of the pipe, the sleeve cooperating with the tube element for coupling of the ducts.

4. A device according to Claim 2 or Claim 3, characterised in that the pipe is part of the first duct and the tube element is the second duct.

5. A device according to Claim 1, characterised in that the connecting element (12) has the form of an arc of a circle greater than a semicircle and occupies a corresponding fraction of the perimeter of the groove (17), the ends of the arc being able to be spread apart elastically from each other to the extent of the diameter of the base of the groove, so as to enable the clip member to be laterally fitted on, and removed from, the first duct.

6. A device according to Claim 1 or Claim 5 in combination with Claim 3, characterised in that the said groove (17) is formed in the sleeve (4, 5).

7. A device according to Claim 1 or Claim 6, characterised in that it includes a clip member having two U-shaped connecting elements (12) disposed in a common plane, the bases of which face towards each other and which cooperate with the respective annular grooves (17) of the first ducts.

8. A device according to Claim 7, characterised in that it includes two hook elements of the said clip member and two retaining elements disposed on either side of the plane of the axes of the two first and second ducts.

9. A device according to Claim 8, characterised in that the clip member comprises a U-shaped body (9) situated substantially in an axial plane at right angles to the plane of the said axes, the branches (11) of which extend axially towards the second ducts and terminate in the hook elements (13), the base (10) of the body carrying the two connecting elements on either side, respectively, of the plane of the body.
